(19) Europäisches Patentamt
European Patent Office
Office européen des brevets

(11) **EP 2 054 327 B1**

(12) **EUROPEAN PATENT SPECIFICATION**

(45) Date of publication and mention
of the grant of the patent:
**20.07.2011 Bulletin 2011/29**

(21) Application number: **07784908.1**

(22) Date of filing: **31.07.2007**

(51) Int Cl.:
**B65G 39/02** (2006.01)

(86) International application number:
**PCT/BG2007/000015**

(87) International publication number:
**WO 2008/019455 (21.02.2008 Gazette 2008/08)**

(54) **ROLLER**

WALZE

ROULEAU

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **14.08.2006 BG 10964906**

(43) Date of publication of application:
**06.05.2009 Bulletin 2009/19**

(73) Proprietors:
• **Mirchev, Dimitar Nikolov**
**4300 Karlovo (BG)**
• **Mirchev, Nikolay Dimitrov**
**1408 Sofia (BG)**
• **Mircheva, Krasimira Dimitrova**
**1408 Sofia (BG)**

(72) Inventors:
• **Mirchev, Dimitar Nikolov**
**4300 Karlovo (BG)**
• **Mirchev, Nikolay Dimitrov**
**1408 Sofia (BG)**
• **Mircheva, Krasimira Dimitrova**
**1408 Sofia (BG)**

(74) Representative: **Benatov, Emil Gabriel**
**Dr. Emil Benatov & Partners**
**Bl. 36B, Liuliakova Gradina Str.**
**1113 Sofia (BG)**

(56) References cited:
**WO-A1-2007/070992     US-A- 2 506 372**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD OF APPLICATION

The invention relates to a roller applicable into devices for continuous transportation, in particular for belt and roller conveyors.

## PREVIOUS STATE OF THE ART

It is known a roller [BG109384A=WO 2007/070992], which consists of a cylindrical body. A respective fixed axle runs through each of the faces of said roller. A respective bearing is fixed in a typical manner to each of the ends of said roller, the outer ring of said bearing being fixed to a respective bearing housing. Labyrinth seals, corresponding to each bearing, are intended for protecting against moisture penetration. The bearing housing is a pass-through one. Each fixed axle goes into a cap connected to the external end of the respective bearing housing. In the cylindrical body, there are at least two uniformly arranged groups, each of said groups having at least two uniformly arranged spokes, the external ends of said spokes being welded to the internal surface of said cylindrical body, and the internal ends of said spokes going into a flange with a centrally welded mobile axle, the ends of said axle being rigidly connected to the respective internal rings of said bearings. Said labyrinth seals are arranged on the internal side between the bearing housing and said mobile axle. In an embodiment of the roller intended for operation under inclination, there is a welded pipe bushing to the lowest flange on the side of the lower bearing, said pipe bushing forming with said flange a protective enclosure around the upper part of lower bearing housing. In another embodiment of the roller intended for operation under inclination, the housing of said lower bearing is connected to said mobile axle and additionally welded spokes, and the lower fixed axle has a stop at its internal end and also has an extension, the internal ring of said lower bearing being rigidly connected thereto. Said labyrinth seals are arranged on the lower side of said lower bearing between said lower fixed axle and the internal surface of said lower bearing housing and fixed by means of a cap with a circlip. It is possible that the mobile axle is a hollow one, the ends of said mobile axle being bearing housings for their respective bearings, and the fixed axles are extended into said bearing housings. Labyrinth seals are arranged between said caps and said mobile axle. The enclosed space in said mobile axle is filled with a lubricant liquid. There is a stopping circlip in the internal end of each extension of said fixed axles, each external ring of said bearings is fixed to said axle with an internal circlip, and each external face of said bearings is fixed by a locking circlip. It is possible that said lubricant liquid in said roller with a hollow mobile axle is of high viscosity. It is possible that said roller has a cylindrical body being uniformly perforated with openings. It is possible that said mobile axle in said roller is connected with said cylindrical body by means of single spokes at equal distances from one another, and each following spoke is displaced at a certain angle with respect to the previous spoke, wherein said spokes form a helical line. It is possible the diameter of said flanges in the roller is greater than the external diameter of said caps.

This roller is of limited applicability and effectiveness as after continuous use the external surface of the roller that operates in contact with the conveyor belt transportation wears off non-uniformly. Wear is maximal in the middle part of the roller, and even leads to rubbing through the material and forming of holes. Edges of those holes are frequently responsible for cutting the belt, which leads to time losses and repair expenses. Such rollers are difficult to be restored as welding of material over the damaged spots causes deformations that disturb the roller alignment and its subsequent utilization worsens the performance of the belt transportation. Moreover, repair welding-over leads to an increase in the roller's weight and respective increase in its inertia, which means that its driving requires more energy. All this leads to higher energy consumption of belt conveyance.

The aim of the invention consists in creating a roller characterized by extended applicability and increased maintainability and effectiveness.

## TECHNICAL ESSENCE OF THE INVENTION

This aim is attained by creating a roller with cylindrical body. A respective fixed axle with connection-shaped end sectors passes through each of the faces of said roller. At each end of the roller, a respective bearing is fixed, the external ring of which is fixed to the respective bearing housing. Labyrinth seals, corresponding to each bearing, are intended for protecting against moisture penetration. The bearing housing is a pass-through one. Each fixed axle goes into a cap connected to the external end of the respective bearing housing. In said cylindrical body there are at least two uniformly arranged groups, each of them having at least two uniformly arranged N spokes, the external ends of said spokes being welded to the internal surface of said cylindrical body, and their internal ends going into a flange with a centrally welded mobile axle, the ends of said axle being rigidly connected with the respective internal rings of said bearings. Said labyrinth seals are arranged on the internal side between said bearing housing and said mobile axle. Said flanges are arranged at a distance of 0.16 to 0.25 parts of the length of said roller from their respective ends of said roller. Said cylindrical body consists of three parts - two end ones and a middle one. In each end part, said axle is shortened and fixed to said respective flange, and respective additional fixed axles are mounted on each of its spokes, on each of said axles being placed a respective bearing, fixed with a circlip to a pipe with diameter providing a unitary operating line of the external surfaces of the two end parts and the middle one.

In this roller, said bearing housing may be massive and made either of steel ST45 or ST3, or of industrial plastic material with parameters coinciding with those of steel ST45 or ST3, or of aluminium alloys, said bearing housing simultaneously being a flange as well. The fixed axles are fixed in said massive bearing housing by means of positioning locks in said openings.

In another embodiment the roller with cylindrical body has a respective fixed axle with connection-shaped end sectors passes through each of the faces of said roller. At each end of the roller, a respective bearing is fixed, the external ring of which is fixed to the respective bearing housing. Labyrinth seals, corresponding to each bearing, are intended for protecting against moisture penetration. The bearing housing is a pass-through one. Each fixed axle goes into a cap connected to the external end of the respective bearing housing. In said cylindrical body there are at least two uniformly arranged groups, each of them having at least two uniformly arranged N spokes, the external ends of said spokes being welded to the internal surface of said cylindrical body, and their internal ends going into a flange with a centrally welded mobile axle, the ends of said axle being rigidly connected with the respective internal rings of said bearings. Said labyrinth seals are arranged on the internal side between said bearing housing and said mobile axle.The roller has a middle part, representing a set of P pipes, which are fixed to two special-shape flanges, each of said flanges representing a disk with a central opening for assembling fixation to its respective axle, as well as with P openings, uniformly arranged along the periphery, for fixing said pipes. The center of each of said openings is located at a distance, equal to d/2, from the external end of said flanges. At least three pipes, arranged at an interval of 120°, have connection bolts welded at their face ends, said bolts passing through their respective openings and fixed to said flanges by their respective nuts. Said remaining pipes have connection pins welded at their face ends, passing freely through their respective openings, wherein short pipes having the same diameter as said pipes are welded as a mirror-image of the pipes on the external side of each flange.

It is possible that in said roller said bearings are sliding or radial ones, or angle ones with configuration of assembling, coinciding with that of said bearings, and arranged in the internal space between the respective flange and the face of said roller on its respective end. Said fixed axles are welded from outside to the face ends of their respective pipes, and said flange has a thickened middle part, to which said spokes being are welded, said spokes being of the form of seats for their respective bearings and having an external segment for providing an operating line, wherein their internal segment is shortened.

The number P of said pipes and their diameter d are mutually related in accordance with the following relationship:

$$P = \frac{0.013D \times w}{d},$$

where:

D is the diameter of the operating line,
d is the external diameter of each pipe,
w is the number of revolutions per minute of said roller,
0.013 is a constant empirically defined coefficient.

In another embodiment the roller with cylindrical body has a respective fixed axle with connection-shaped end sectors passes through each of the faces of said roller. At each end of the roller, a respective bearing is fixed, the external ring of which is fixed to the respective bearing housing. Labyrinth seals, corresponding to each bearing, are intended for protecting against moisture penetration. The bearing housing is a pass-through one. Each fixed axle goes into a cap connected to the external end of the respective bearing housing. There is a flange with a centrally welded mobile axle, the ends of said axle being rigidly connected with the respective internal rings of said bearings. Said labyrinth seals are arranged on the internal side between said bearing housing and said mobile axle. Said external flange, said fixed axle, said cap and said bearing housing may form a monolithic seat for said bearings. Said flanges have protruding arresters uniformly arranged along their periphery. A respective half-pipe is welded on each two arresters which are arranged on one longitudinal line. The mobile axles are fixed to their respective flanges by means of a self-locking nut.

In said roller it is possible that said labyrinth seal 5 consists of a wiper seal between said bearing and said circlip, and there is a tightly packed plastic protective washer to said labyrinth seal and said circlip.

An advantage of said roller is that it features extended applicability and increased maintainability and effectiveness.

## DESCRIPTION OF ACCOMPANYING FIGURES

The invention is explained in more details with the aid of one exemplary embodiment of said roller shown in the accompanying figures, where:

- Fig. 1 is a longitudinal section of a first embodiment of said roller;
- Fig. 2 is a transversal section along AA through the middle of the roller of Fig. 1;
- Fig. 3 is a transversal section along BB through a flange of the roller of Fig. 1;
- Fig. 4 is a longitudinal section of a second embodiment of said roller;

- Fig. 5 is a longitudinal section of a third embodiment of said roller;
- Fig. 6 is a transversal section along CC through the middle of the roller of Fig. 5;
- Fig. 7 is a transversal section along DD before a flange of the roller of Fig. 5;
- Fig. 8 is a longitudinal section of a fourth embodiment of said roller;
- Fig. 9 is the flange of the roller of Fig. 8;
- Fig. 10 is a transversal section of the flange of the roller of Fig. 8;
- Fig. 11 is a longitudinal section of the roller with flanges with arresters;
- Fig. 12 is a transversal section along HH of the roller of Fig. 11;
- Fig. 13 is a transversal section along JJ of the roller of Fig. 11;
- Fig. 14 is a section of said labyrinth seal.

## PREFERRED EMBODIMENT AND FUNCTIONING OF THE INVENTION

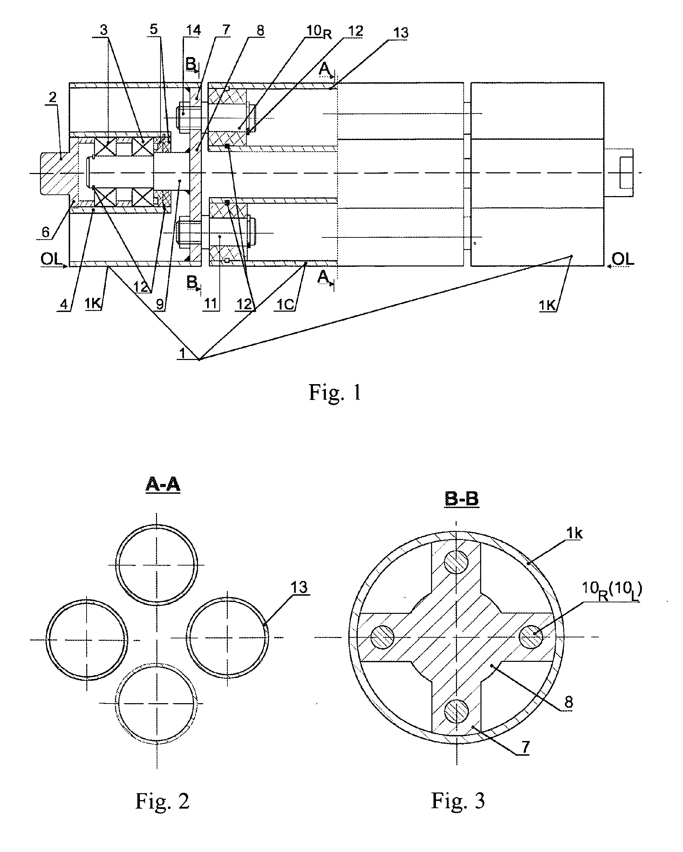

The roller of Fig.1, 2 and 3 has a cylindrical body 1. A respective fixed axle 2 with connection-shaped end sectors runs through each of the faces of the roller. A respective bearing 3 is fixed at each end of the roller, the external ring of said bearing 3 being fixed to respective bearing housing 4. Labyrinth seals 5 corresponding to each bearing 3 are intended for protecting against moisture penetration. The bearing housing 4 is a pass-through one. Each fixed axle 2 goes into a cap 6 connected to the external end of the respective bearing housing 4. In said cylindrical body 1 there are at least two uniformly arranged groups, each of these groups having at least two uniformly arranged N spokes 7, the external ends of said spokes being welded to the internal surface of said cylindrical body 1, and their internal ends go into the flange 8 with a centrally welded mobile axle 9, the ends of said mobile axle being rigidly connected to the respective internal rings of bearings 3. The labyrinth seals 5 are arranged on the internal side between the bearing housing 4 and the mobile axle 9. The flanges 8 are arranged on their respective ends of the roller at a distance of 0.16 to 0.25 parts of the length of said roller. Said cylindrical body 1 consists of three parts - two end parts 1k and a middle one 1c. In each end part 1k, said axle 9k is shortened and fixed in the respective flange 8, and on each of its spokes 7 there are mounted respective additional fixed axles $10_R$, on each of said axles a respective bearing 11 being placed and fixed with a circlip 12 to a pipe 13 with diameter providing a unitary operating line OL of the external surfaces of the two end parts 1k and the middle part 1c.

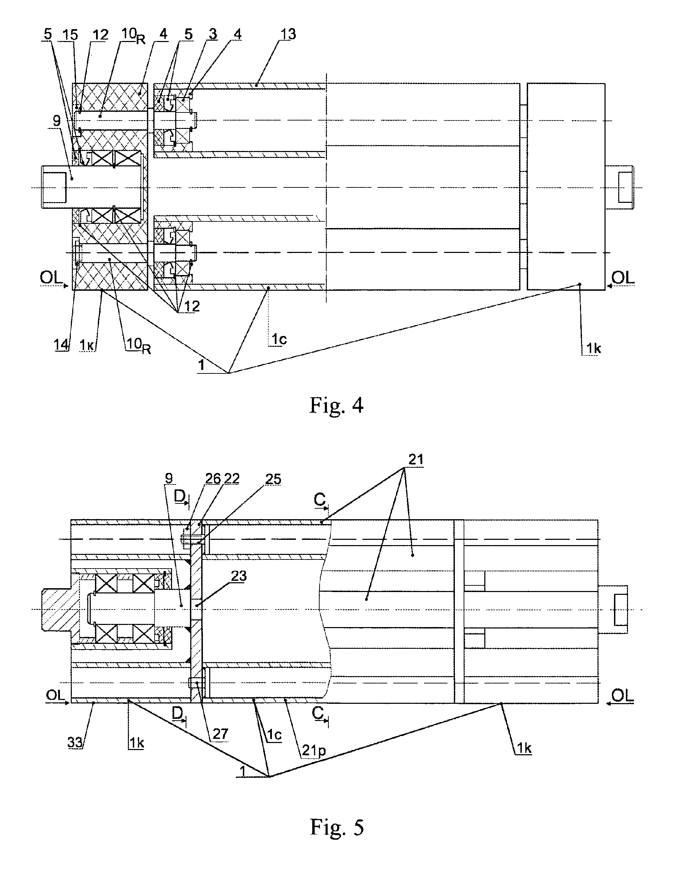

In said roller (Fig. 4), the bearing housing 4 may be massive and made either of steel ST45 or ST3, or of industrial plastic with parameters, coinciding with those of steel ST45 or ST3, or of aluminium alloys, and at the same time said bearing housing is also a flange. In this massive bearing housing 4 there are fixed axles $10_R$, which are fixed by means of respective positioning locks 14 in the openings 15.

It is possible that the roller (Fig. 5, 6, and 7) has a middle part 1c, representing a set of P pipes 21p, which are fixed to two flanges 22 (in the place of flanges 8), each of them representing a disk with a central opening 23 for assembling fixation to its respective axle 9 as well as with P openings 24, uniformly arranged along the periphery, for fixing the pipes 21p. The center of each of these openings is at a distance from the external end of flanges 22, which is equal to d/2. At least three pipes 21, arranged at an interval of 120°, have connection bolts 25, welded at their face ends, which pass through their respective openings 24 and are fixed to said flanges 22 by their respective nuts 26. The remaining pipes 21 have connection pins 27, welded at their face ends, which pass freely through their respective openings 24, wherein short pipes 33 with the same diameter as pipes 21 are welded on the external side of each flange 22 as a mirror-image of pipes 21.

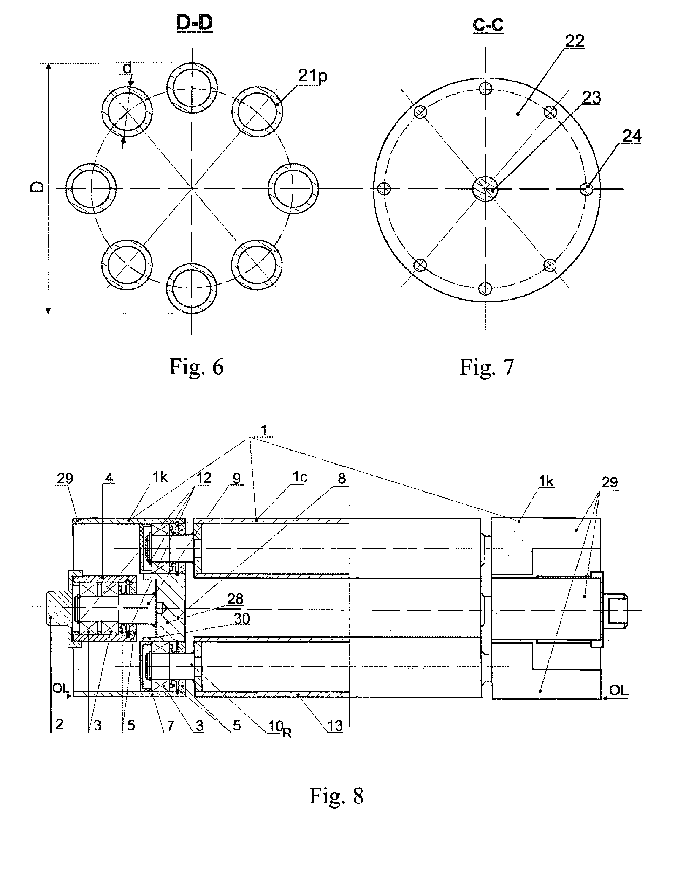

It is possible in the roller (Fig. 8, 9 and 10) that the bearings 11 are sliding or radial, or angle bearings with a configuration of assembling, which coincides with that of bearings 3, and are arranged in the internal space between the respective flange 8 and the face of the roller on its respective end. The fixed axles $10_R$ are welded from outside to the face ends of their respective pipes 13, and the flange 8 has a thickened middle part 28, to which the spokes 7 are welded, said spokes being of the form of seats for their respective bearings 3 and having an external segment 29 for ensuring the operating line OL, wherein their internal segment 30 is shortened.

The number P of pipes 13 and 21 and their diameter d are related in accordance with the following relationship:

$$ P = \frac{0.013D \times w}{d} , $$

where:

    D is the diameter of the operating line OL,
    d is the external diameter of each pipe 21,
    w is the number of revolutions per minute of said roller,
    0.013 is a constant empirically defined coefficient.

In the roller, said axle 2 is hollow and has an additional external flange 32, a lubricator 31 being mounted in the connection opening of said flange 32.

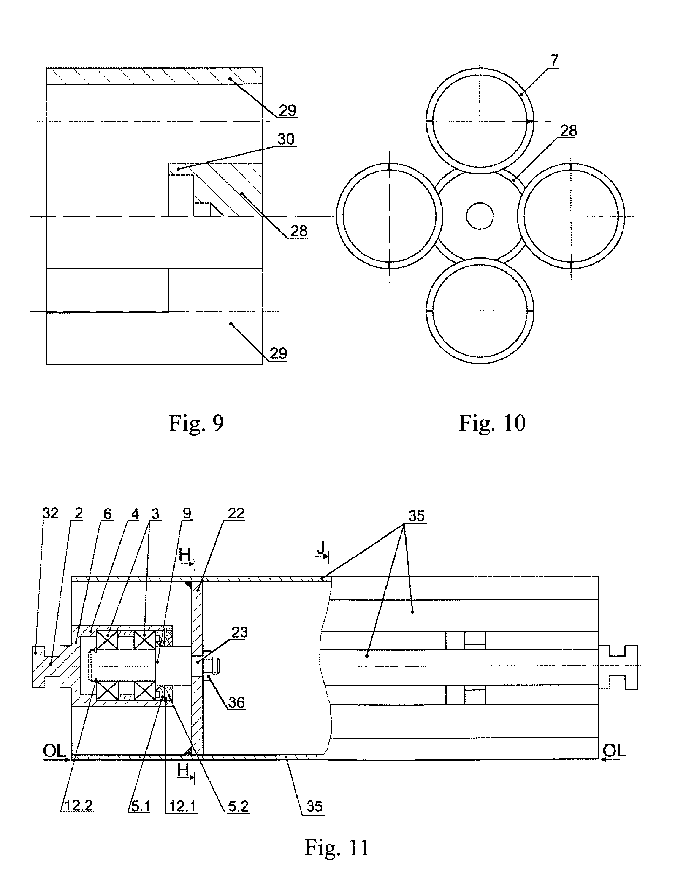

In the roller (Fig. 11, 12 and 13), the external flange 32, the fixed axle 2, the cap 6 and the bearing housing 4 form a monolithic seat of the bearings 3. The flanges 22 have protruding arresters 34 uniformly arranged along their periphery. A respective half-pipe 35 is welded on every two arresters 34, which are arranged on one longitudinal line. The mobile axles 9 are fixed to the respective flanges 22 with a self-locking nut 36.

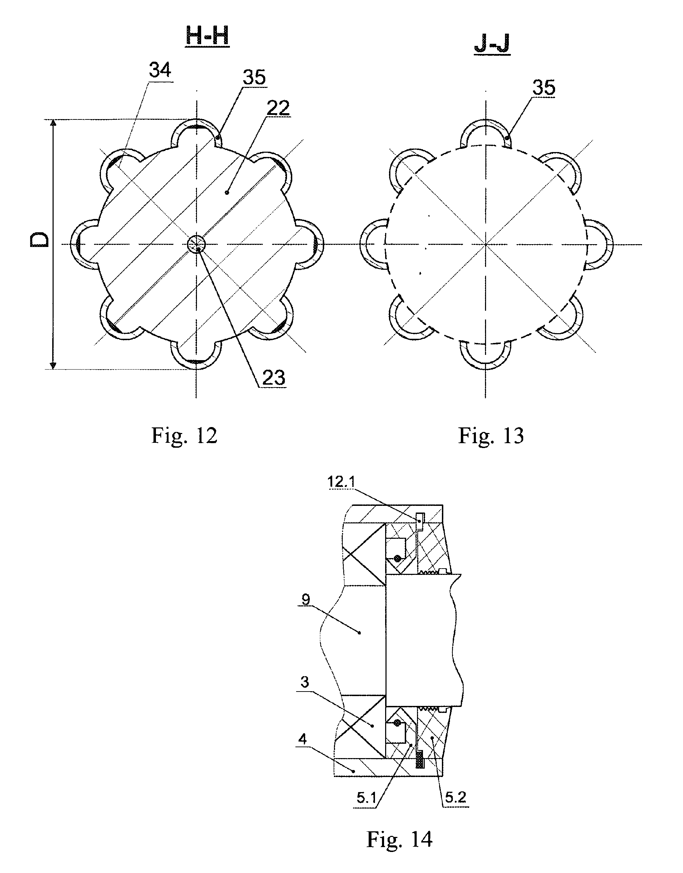

It is possible that in the roller (Fig. 14) the labyrinth seal 5 consists of a wiper seal 5.1 between the bearing 3 and the circlip 12.1, and there is a tightly packed plastic protective washer 5.2 to said labyrinth seal 5 and said circlip 12.1.

The roller functions as follows:

In the embodiment of Figs. 1 to 4 and 8, the roller 1 in operating position is placed on a conveyor, and with its operating line OL of its constituting two end rollers 1k and the middle constituting roller 1c it touches the working belt which is constantly moving over it (not shown in the figures). As a result, the friction between the roller and the belt is diminished because the pipe 13 rotates around its own axles $10_R$ and $10_L$. This leads to decreasing of the energy required for driving the conveyor belt. At the same time, the wear of the operating surface of the roller and of that surface of the belt which is in contact with the roller is also diminished due to the same reason. This is so, because of this rotation of pipes 13 the belt does not slip, but rolls over these pipes. Here, even when the belt is slightly loaded, its contact with the roller is sufficient for starting the rotation of pipes 13. This is so, due to the fact that as a result of the complex support formed by the bearings 3 and 11 in pipes 13 and in the roller as a whole, the pipes start rotating at a lesser force. The diminishment of the force for starting the rotation is also a result from the decreased mass of each of the pipes 13. This prevents the irregular wear of the operating surface of the roller, which may result from the continuous friction of the belt on its fixed operating surface. At eventual locking of said axle $10_R$ or $10_L$, which stops the rotation of respective pipe 13 around said axle, under the action of the belt that starts slipping over that pipe 13, the entire roller will rotate around said axle 9 to a position in which at least one other trouble-free pipe 13 will be in rolling contact with the belt. In another case, when the main axle 9 is wedged and the roller stops rotating, in the same way that of pipes 13, which was the last and continues to be in contact with the belt, will go on ensuring the normal operation of the conveyor as it itself turns around its axle 10.

Bearings 3 or 11 for pipes 13 facilitate the operation of bearings 3 of the main axle 9, considerably prolonging in such a way the operational life of the roller.

To ensure the smooth operation of the roller, the number P of pipes 13 and 21 and their diameter d are related in accordance with the following relationship:

$$P = \frac{0.013D \times w}{d} \, ,$$

where:

D is the diameter of the operating line OL,
d is the external diameter of each pipe 21,
w is the average number of revolutions per minute of said roller,
0.013 is a constant empirically defined coefficient.
As P may be a non-integer number, it should be rounded.

It is obvious that the smaller the diameter d of pipes 13 and 21 and the greater the diameter D of the roller, the larger the number of pipes P. For example, for a diameter of the roller D = 133 mm and diameter of pipes d = 20 mm, and for an average number of revolutions per minute w = 100, P is equal to 8.645, and the real number of pipes 21 is 8 (Figs. 6 and 7). In another example for a diameter of the roller D = 133 mm and diameter of pipes d = 45 mm, and for an average number of revolutions per minute w = 100, P is equal to 3.758, and the real number of pipes 21 is 4 (Figs. 2 and 10).

At the same time, the clearance obtained between the belt and two adjacent pipes 13 or 21, when the belt is in contact with both adjacent rollers, allows additional ventilating of the conveyor, and in such a way it also facilitates the self-cleaning of the conveyor, because the eventually penetrating pollutants are easily self-removed through that clearance during motion.

The choice of material for the massive bearing housing 4 (Fig. 4) is conformed with the necessity of making the roller lighter, and for that reason the material is either steel ST45 or ST3, or industrial plastic or aluminium alloy with parameters coinciding with or close to those of steel ST45 or ST3. The lighter roller consumes less energy in rotation starting and features diminished loading of bearings.

In all embodiments of the roller with rotating pipes 13 or fixed pipes 21, the most probable failure is the wedging or rubbing-through of one of these pipes. It is sufficient to replace that pipe 21 and the roller is completely restored. This makes the roller and the entire conveyor easy for maintaining, which is accompanied by lower maintenance cost.

The fixed axles 2 on caps 6 (Fig. 1) ensure the engagement of said roller to the roller bearers (not shown in the figures) of the conveyor. These caps 6 close the bearing housing 4 and in this way they protect the bearings 3 from pollution, at the same time retaining the lubricant liquid. Labyrinth seals 5 close said bearing housing 4 from its internal side and also protect its from external pollutants as well as from leakage of the lubricant liquid. A unitary operating line OL is provided by the flanges 8 through the form of their spokes 7 (Figs. 2 and 3) and the arrangement of connection openings on the spokes 7 for the central axle 9 and for all rollers 1c, as well as through the rollers 1k connected to the external ends of spokes 7. The circlips 12 block the bearings 3 and 11 to their respective axles 9 and $10_R$ - $10_L$. Nuts 14 fix their respective axles $10_R$ - $10_L$ in their respective spokes 7 of flanges 8.

In the embodiment of Fig. 4 the nuts 14 fix the axles $10_R$ - $10_L$ in seats 15 in the integrated bearing housing 4, which performs simultaneously also the functions of the flange 8 with spokes 7. Here, fixed axles 9 through their external shanks serve for engaging the roller to the roller bearers (not shown in the figure) of the conveyor. For in this case bearing housings 4 are not pass-through ones, their length is smaller and as a result the pipes 13 are longer, which increases the reliability of said roller under higher loads. This structure of the bearing housing 4 diminishes the weight of the roller and in addition simplifies its assembling and disassembling.

In the embodiment of Figs. 8, 9, and 10, the flanges 8 with a thickened middle part 28 and the formed bearing seats of the external segment 29 and the internal one 30 provide for said bearings 3 the possibility of operating with increased reliability, whereas, at the same time, the external segments 29 also provide an operating line OL as they are aligned with the operating line of pipes 13. Due to the fact that the bearing housings are located outside of the rollers 13, in case of eventual replacement of failed such rollers the bearings 3 are not discarded, and if they are in good condition, they remain in use with a new roller 13 mounted in them.

In the embodiment of Fig. 5, 6, and 7, the pipes 21 do not rotate around their axis. Due to this fact, only those surfaces of pipes 21 are rubbed through during operation, which are in contact with the conveyor belt. When a pipe 21 is rubbed through, the structure allows its loosening by means of the bolt 25 and nut 26, that are securing it, as well as its rotating to a position in which a new non-worn segment makes contact with the belt. When any of pipes 21 becomes worn off over all its sides, it can be easily dismantled and replaced by a new one. Here, the flange 22 is modified in such a way that it ensures the formation of the appropriate clearance between adjacent pipes 21. These possibilities prolong the operational life of the roller at a minimum cost. Those pipes 21, which are not fixed with bolt 25 and nut 26, are fixed easily to flanges 22 with the shields 27. Pipes 33 are welded to the flange 22 on the sides towards the ends of said roller 1, said pipes being mirror-image extensions of the pipes 21 as well as not being subject to replacement for they are almost without any wear.

In the embodiment of Figs. 11, 12, and 13, the roller features simplified assembling as the bearing seat is monolithic and unites the external flange 32, fixed axle 2, cap 6, and bearing housing 4. Additionally, said roller is made lighter due to using half-pipes 35 instead of entire pipes 21. When one of the half-pipes 35 is more or less worn away, it is easily replaced by being cut off, its seat is cleaned up, and a new pipe 35 is welded in its place.

All embodiments may use a known labyrinth seal 5, but in this case a special such labyrinth seal has been developed, wherein said washer 5.2 additionally protects said wiper seal 5.1 and respectively the bearing 3 itself against penetration of external pollutants. Washer 5.2 is made of technical acid- and heat-resistant plastic material.

**Claims**

1. A roller with a cylindrical body (1), wherein a respective fixed axle (2) with connection-shaped end sectors passes through each of the faces of said roller, a respective bearing (3) being fixed at each end of said roller (1), the external ring of said bearing (3) being fixed to a respective bearing housing (4), wherein labyrinth seals (5) corresponding to each bearing (3) are intended for protecting against moisture penetration, said bearing housing (4) being a pass-through one, and each fixed axle (2) going into a cap (6) connected to the external end of said respective bearing housing (4), there being at least two groups, uniformly arranged, in the cylindrical body (1), each of said groups having at least two uniformly arranged N spokes (7), the external ends of said spokes being welded to the internal surface of said cylindrical body (1), and their internal ends going into a flange (8) with a centrally welded mobile axle (9), the ends of said axle being rigidly connected to the respective internal rings of said bearings (3), and said labyrinth seals (5) being arranged on the internal side between said bearing body (4) and said mobile axle (9), **characterized in that** the flanges (8) are arranged at a distance of 0.16 to 0.25 parts of the length of said roller from their respective ends of said roller, and said cylindrical body (1) comprises three parts - two end ones (1k) and a middle one (1c), said axle (9) being shortened and fixed to said respective flange (8) in each end part (1k), and respective additional fixed axles ($10_R$) being mounted on each of its spokes (7), a respective bearing (11) being mounted on each of said axles and fixed with a circlip (12) to a pipe (13) with diameter providing a unitary operating line (OL) of the external surfaces of both end parts (1k) and the middle one (1c).

2. A roller with a cylindrical body (1), wherein a respective fixed axle (2) with connection-shaped end sectors passes through each of the faces of said roller, a respective bearing (3) being fixed at each end of said roller (1), the external ring of said bearing (3) being fixed to a respective bearing housing (4), wherein labyrinth seals (5) corresponding to each bearing (3) are intended for protecting against moisture penetration, said bearing housing (4) being a pass-through one, and each fixed axle (2) going into a cap (6) connected to the external end of said respective bearing housing (4), there being at least two groups, uniformly arranged, in the cylindrical body (1), each of said groups having at least two uniformly arranged N spokes (7), the external ends of said spokes being welded to the internal surface of said cylindrical body (1), and their internal ends going into a flange (8) with a centrally welded mobile axle (9), the ends of said axle being rigidly connected to the respective internal rings of said bearings (3), and said labyrinth seals (5) being arranged on the internal side between said bearing body (4) and said mobile axle (9), **characterized in that** its middle part (1c) represents a set of P pipes (21p), which are fixed to two flanges (22) each of which representing a disk of a central opening (23) for assembling fixation to its respective axle (9), as well as with P openings (24), uniformly arranged along the periphery, for fixation of said pipes (21p), the center of each of these openings being at a distance from the external end of said flanges (22) equal to d/2, wherein at least three pipes (21), arranged at intervals of 120°, have connection bolts (25), welded at their faces, passing through their respective openings (24) and fixed to said flanges (22) with their respective nuts (26), and said remaining pipes (21) have connection pins (27), welded at their faces, passing freely through their respective openings (24), whereas on the external side of each flange (22), as a mirror-image of said pipes (21), there are welded short pipes (33) having the same diameter as said pipes (21).

3. A roller according to Claims 1 or 2, **characterized in that** the bearing housing (4) is a massive one and made either of steel ST45 or ST3, or of industrial plastic material with parameters coinciding with those of steel ST45 or ST3, or of aluminium alloys, said bearing housing simultaneously being a flange as well, the fixed axles ($10_R$) being fixed in said massive bearing housing (4) by means of a respective positioning lock (14) in the openings (15).

4. A roller according to Claim 1, **characterized in that** said bearings (11) are sliding or radial ones, or angle ones having a configuration of assembling, coinciding with that of said bearings (3), and are arranged in the internal space between the respective flange (8) and the face of said roller at its respective end, wherein said fixed axles ($10_R$) are welded from outside to the face ends of their respective pipes (13), and said flange (8) has a thickened middle part (28), to which said spokes (7) are welded, said spokes being of the form of seats for their respective bearings (3) and having an external segment (29) for ensuring said operating line (OL), whereas their internal segment (30) is shortened;

5. A roller according to Claims 1 to 4, **characterized in that** the number P of pipes (13) and (21) and their diameter d are mutually related in accordance with the following relationship:

$$P = \frac{0.013D \times w}{d} \, ,$$

where:

D is the diameter of the operating line OL,
d is the external diameter of each pipe 21,
w is the number of revolutions per minute of said roller,
0.013 is a constant, empirically defined coefficient.

6. A roller with a cylindrical body (1), wherein a respective fixed axle (2) with connection-shaped end sectors passes through each of the faces of said roller, a respective bearing (3) being fixed at each end of said roller (1), the external ring of said bearing (3) being fixed to a respective bearing housing (4), wherein labyrinth seals (5) corresponding to each bearing (3) are intended for protecting against moisture penetration, said bearing housing (4) being a pass-through one, and each fixed axle (2) going into a cap (6) connected to the external end of said respective bearing housing (4), and there is a flange (22) with a centrally fixed mobile axle (9), the ends of said axle being rigidly connected to the respective internal rings of said bearings (3), and said labyrinth seals (5) being arranged on the internal side between said bearing body (4) and said mobile axle (9), **characterized in that** an external flange (32), said fixed axle (2), said cap (6) and said bearing housing (4) form a monolithic seat of said bearings (3), wherein said flanges (22) have protruding arresters (34) uniformly arranged along their periphery, a respective half-pipe (35) being welded on each two arresters (34), which are arranged on one longitudinal line, and said mobile axles (9) being fixed to their respective flanges (22) by means of a self-locking nut (36).

7. A roller according to Claims 1 to 6, **characterized in that** the labyrinth seal (5) consists of a wiper seal (5.1) between the bearing (3) and the circlip (12.1), and there is a tightly packed plastic protective washer (5.2) to said labyrinth seal (5) and said circlip (12.1).

**Patentansprüche**

1. Eine Rolle mit einem zylindrischen Körper (1), bei der jeweils eine feste Achse (2) mit anschlussförmigen Enden jede Stirnseite der Rolle durchläuft, wobei jeweils ein Lager (3) an jedem Ende der Rolle (1) angebracht ist, der Außenring des Lagers (3) mit einem jeweiligen Lagergehäuse fixiert (4) ist, wobei kammprofilierte Dichtungen (5), die der jeweiligen Lager (3) zugeordnet sind, zum Schutz gegen das Eindringen von Feuchtigkeit dienen, wobei das Lagergehäuse (4) durchgängig ist, und jede feste Achse (2) in einen Deckel (6) übergeht, die an das externe Ende des jeweiligen Lagergehäuse (4) befestigt ist, wobei in dem zylindrischen Körper (1) mindestens zwei Gruppen gleichmäßig angeordnet sind, jede der Gruppen mit mindestens zwei gleichmäßig angeordneten Speichen N (7), deren äußeren Enden zur Innenfläche des zylindrischen Körpers (1) verschweißt sind, und deren inneren Enden in einen Flansch (8) übergehen, der eine mittengeschweißte mobile Achse (9) aufweist, wobei die jeweilige Innenringen der Lager (3) starr auf den Enden der Achse angebracht sind, und die kammprofilierte Dichtungen (5) auf der Innenseite zwischen den Lagerkörper (4) und die mobile Achse (9) angeordnet sind, **dadurch gekennzeichnet, daß** die Flansche (8) in einem Abstand von 0,16 bis 0,25 Teile der Rollenlänge aus den Enden der jeweiligen Rolle angeordnet sind und der zylindrische Körper (1) aus drei Teilen besteht - zwei äußeren (1k) und einen mittleren (1c), wobei in jedem äußeren Teil (1k) die Achse (9k) verkürzt und auf dem jeweiligen Flansch (8) angebracht ist, und auf jede seiner Speichen (7) jeweils eine zusätzliche feste Achse (10R) befestigt ist, wobei auf jeder dieser Achsen ein Lager (11) montiert und mit einem Sicherungsring (12) auf einem Rohr (13) versichert ist, dessen Durchmesser eine einheitliche operative Linie (OL) der Außenflächen der beiden äußeren Teile (1k) und des mittleren Teils (1c) gewährleistet.

2. Eine Rolle mit einem zylindrischen Körper (1), bei der jeweils eine feste Achse (2) mit anschlussförmigen Enden jede Stirnseite der Rolle durchläuft, wobei jeweils ein Lager (3) an jedem Ende der Rolle (1) angebracht ist, der Außenring des Lagers (3) mit einem jeweiligen Lagergehäuse fixiert (4) ist, wobei kammprofilierte Dichtungen (5), die der jeweiligen Lager (3) zugeordnet sind, zum Schutz gegen das Eindringen von Feuchtigkeit dienen, wobei das Lagergehäuse (4) durchgängig ist, und jede feste Achse (2) in einen Deckel (6) übergeht, die an dem externen Ende des jeweiligen Lagergehäuse (4) befestigt ist, wobei in dem zylindrischen Körper (1) mindestens zwei Gruppen gleichmäßig angeordnet sind, jede der Gruppen mit mindestens zwei gleichmäßig angeordneten Speichen N (7), deren äußeren Enden zur Innenfläche des zylindrischen Körpers (1) verschweißt sind, und deren inneren Enden in einen Flansch (8) übergehen, der eine mittengeschweißte mobile Achse (9) aufweist, wobei die jeweilige Innenringen der Lager (3) starr auf den Enden der Achse angebracht sind, und die kammprofilierte Dichtungen (5) auf der Innenseite zwischen den Lagerkörper (4) und die mobile Achse (9) angeordnet sind, **dadurch gekennzeichnet, daß** sein mittlerer Teil (1c) aus einem Satz von P Rohre (21p) besteht, die auf zwei Flansche (22) befestigt sind, von denen jeder eine Scheibe mit einer zentralen Bohrung (23) zur Montageklemmung auf seine jeweilige Achse (9) darstellt, sowie mit P Bohrungen (24) versehen ist, die gleichmäßig über den Umfang angeordnet sind, zur Befestigung der Rohre (21p), und das Zentrum jeder dieser Bohrungen in einem Abstand von dem äußeren Ende der Flansche (22) gleich d/2 liegt, wobei mindestens drei Rohre (21), in 120° angeordnet, in ihrer Stirnflächen verschweißte Verbindungsbolzen (25) aufweisen, die durch ihren jeweiligen Bohrungen (24) verlaufen und den Flanschen (22) mit ihren jeweiligen Muttern (26) angeschraubt sind, und die restlichen Rohre (21) Anschlußstifte (27) auf ihren Stirnflächen verschweißt haben, die frei durch den jeweiligen Bohrungen (24) durchlaufen, während auf der Außenseite jedes Flansches (22), auf Spiegelbild der Rohre (21), kurze Rohre (33) mit dem gleichen Durchmesser wie die Rohre (21) geschweißt sind.

3. Eine Rolle nach Anspruch 1 oder 2, **dadurch gekennzeichnet, daß** das Lagergehäuse (4) massiv ist und entweder aus Stahl ST45 oder ST3, oder aus industriellem Kunststoff mit Parameter, die mit denen von Stahl ST45 oder ST3 gleich sind, oder aus Aluminium Legierungen hergestellt ist, wobei das Lagergehäuse gleichzeitig ein Flansch ist, und die festen Achsen (10R) in dem massiven Lagergehäuse (4) mittels einer jeweiligen Positionssperre (14) in die Bohrungen (15) montiert sind.

4. Eine Rolle nach Anspruch 1, **dadurch gekennzeichnet, daß** die Lager (11) Gleit- oder Radiallager oder Radial-Kegelrollenlager sind mit einer Montagekonfiguration, die der Lager (3) gleich ist, und sind in dem Innenraum zwischen den jeweiligen Flansch (8) und die Stirnfläche der Rolle von ihrer jeweiligen Seite angeordnet, wobei die festen Achsen (10R) von außen auf die Stirnfläche der jeweiligen Röhren (13) verschweißt sind und der Flansch (8) ein verdicktes Mittelteil (28) hat, zu dem die Speichen (7) verschweißt sind, wobei die Speichen die Form der Sitze für ihre jeweiligen Lager (3) haben und einen äußeren Segment (29) für die Gewährleistung der operativen Linie (OL) aufweisen, während deren inneren Segment (30) verkürzt ist.

**5.** Eine Rolle nach einem der Ansprüche 1 bis 4, **dadurch gekennzeichnet, dass** die Anzahl P der Röhren (13) und (21) und deren Durchmesser d in gegenseitigem Zusamenhang mit der folgenden Beziehung verbunden sind:

$$P = \frac{0.013D \times w}{d} \, ,$$

wobei:

D ist der Durchmesser der operativen Linie OL,
d ist Aussendurchmesser jedes Rohres 21,
w ist die Anzahl der Umdrehungen in einer Minute der Rolle,
0.013 ist ein konstanter, empirisch festgelegte Koeffizient.

**6.** Eine Rolle mit einem zylindrischen Körper (1), bei der jeweils eine feste Achse (2) mit anschlussförmigen Enden jede Stirnseite der Rolle durchläuft, wobei jeweils ein Lager (3) an jedem Ende der Rolle (1) angebracht ist, der Außenring des Lagers (3) mit einem jeweiligen Lagergehäuse (4) fixiert ist, wobei kammprofilierte Dichtungen (5), die der jeweiligen Lager (3) zugeordnet sind, zum Schutz gegen das Eindringen von Feuchtigkeit dienen, wobei das Lagergehäuse (4) durchgängig ist, und jede feste Achse (2) in einen Deckel (6) übergeht, die an das externe Ende des jeweiligen Lagergehäuse (4) befestigt ist, und weist ein Flansch (22) auf mit einer mittig angebrachten mobilen Achse (9), wobei die Enden der Achse fest mit den jeweiligen internen Ringen der Lager (3) verbunden sind, und die kammprofilierte Dichtungen (5) auf der Innenseite zwischen den Lagerkörper (4) und die mobile Achse (9) angeordnet sind, **dadurch gekennzeichnet, dass** ein externer Flansch (32), die erwähnte feste Achse (2), der erwähnte Deckel (6) und das Lagergehäuse (4) einen monolithischen Sitz der Lager (3) bilden, wobei die Flansche (22) vorstehende Arretierungsnasen (34) gleichmäßig angeordnet entlang ihrem Umfang aufweisen, und jeweils eine Rohrhälfte (35) auf jeweils zwei Arretierungsnasen (34), die auf der einen Längslinie angeordnet sind, geschweißt ist, und die mobilen Achsen (9) an deren entsprechenden Flansche (22) durch eine selbstsichernde Mutter (36) fest angebracht sind.

**7.** Eine Rolle nach einem der Ansprüche 1 bis 6, **dadurch gekennzeichnet, dass** die kammprofilierte Dichtung (5) aus einem Dichtring (5.1) zwischen dem Lager (3) und den Sicherungsring (12.1) besteht, und der dazu gehörige Sicherungsring (12.1) eine tief eingepresste schützende Kunststoffscheibe (5.2) aufweist.

**Revendications**

**1.** Un rouleau avec un corps cylindrique (1), du quel chaque des deux fronts latéraux sont traversés d'un axe immobile (2) respectif avec des extrémités façonnées pour assemblage, un roulement respectif (3) est fixé à chacune de ses extrémités, dont l'anneau extérieur est fixé dans un corps porte-roulement (4), auquel respectif à chaque roulement (3) sont fixés les joints labyrinthes (5) pour protection d'humidité, ainsi que le corps de porte-roulement (4) est traversable et chaque axe (2) immobile entre dans un capuchon (6) relié à la fin externe du corps porte-roulement respectif (4) ainsi que dans le corps cylindrique (1) sont uniformément disposés au moins deux groupes, chacun avec deux uniformément disposés N rayons (7) dont les extrémités extérieures sont soudées à la surface intérieure du corps cylindrique (1) et ses extrémités internes passent dans une bride (8), un axe mobile (9) est centralement soudé à la dite bride (8), dont les extrémités sont rigidement reliés avec les bagues intérieures respectives des roulements (3) et les joints labyrinthes (5), sont disposés du côté interne entre ledit corps porte-roulement (4) et ledit axe mobile (9), **caractérisé en ce que**, les brides (8) étant disposées de leurs extrémités respectives d'une distance de 0,16 à 0,25 partie de la longueur de rouleau cylindrique et le corps cylindrique (1) est composé de trois parties: deux externes (1K) et une moyenne (1C), ainsi que dans chacune des parties externes (1K) l'axe (9) est raccourcie et fixé dans la bride respective (8) et sur chacun de ses rayons (7) sont montés respectivement des axes immobiles complémentaires (10R), sur chacun desquels il y a un roulement respectif (11) fixé par rondelle de fixation (12) vers le tube rond (13) d'un diamètre assurant une ligne commune de travail (OL) des surfaces externes de deux parties extrêmes (1K) et la partie moyenne (1C).

**2.** Rouleau avec un corps cylindrique (1), du quel chaque des deux front latéraux sont traversés d'un axe immobile (2) respectif avec des extrémités façonnées pour assemblage, un roulement (3) respectif est fixé sur chacune de ses extrémités, dont l'anneau extérieur est fixé dans un corps de porte-roulement (4), auquel respectif à chaque roulement (3) sont fixés des joints labyrinthes (5) pour protection de l'humidité, ainsi que le corps porte-roulement (4) est traversable et chacun des axes immobiles (2) entre dans un capuchon (6), relié à la fin externe des corps porte-roulement (4) respectif, ainsi que dans le corps cylindrique (1) sont uniformément disposés au moins deux groupes, chacun de ces deux groupes possède au moins deux rayons (7) N uniformément disposées, dont les extrémités externes sont soudés à la surface intérieure du corps cylindrique (1) et ses extrémités internes passent dans une bride (8), un axe mobile (9) est centralement soudé, dont les extrémités sont rigidement reliées aux bagues intérieures des roulements (3) et les joints labyrinthes (5) sont disposées du côté intérieur du corps porte-roulement (4) et l'axe mobile (9), **caractérisé en ce que**, sa partie moyenne (1C) est un jeu de tubes ronds P (21P), qui sont fixés sur les deux brides (22), chacune d'elles présente un disque avec un trou central (23) pour fixation de montage sur son axe (9) respectif, ainsi, il y a P uniformément disposés des trous (24) sur la périphérie pour la fixation des tubes ronds (21P), ainsi que le centre de lesdits trous est distancé de l'extrémité de lesdites brides (22) d'une distance à d/2, ainsi au moins trois desdits tubes ronds (21) disposés à 120° ont des boulons soudés (25) sur les faces latérales pour assemblage desdits passant par les trous correspondants (24) et fixés sur lesdites brides (22) par les écrous respectifs (26) et les tubes ronds qui restent (21) ont des tiges (arbre) (27) soudées sur les faces latérales, traversant librement les trous respectifs (24), ainsi que du côté extérieur de chaque bride (22) d'une façon réflective lesdits tubes ronds (21) les tubes ronds (33) courts sont soudés ayant le même diamètre que lesdits tubes ronds (21).

**3.** Rouleau selon revendication 1 et 2, **caractérisé en ce que** le corps porte-roulement (4) est compact d'acier ST45 ou ST3, ou de plastique industriel de même paramètres que aciers ST45 ou ST3, ou d'alliages d'aluminium, ainsi qu' en même temps c'est une bride, ainsi que dans ce corps compact (4), par un fixateur (14) respectif sont fixés dans les trous (15) des axes immobiles (10R).

**4.** Rouleau selon revendication 1, **caractérisé en ce que**, les roulements (11) sont glissants ou radiaux, ou radiaux-axiaux avec une configuration de montage respective des roulements (3) et sont disposés dans l'espace intérieur entre la bride (8) respective et la face de rouleau de son extrémité respective, ainsi que les axes immobiles (10R) sont soudés du côté extérieur des faces des tubes ronds respectifs (13) et la bride (8) a une partie moyenne agrandie (28), sur laquelle sont lesdits rayons (7) soudés, qui ont la forme de nids pour lesdits roulements (3) respectifs et ils ont un segment (29) externe pour assurer la ligne de travail (OL), ainsi que le segment interne (30) est raccourci.

**5.** Rouleau selon les revendications de 1 à 4, **caractérisé en ce que**, le nombre P de tubes ronds (13) et (21) est au dépend de son diamètre d, d'un rapport suivant :

$$P = \frac{0,013D.w}{d} \quad ,$$

ou :

D = le diamètre de la ligne OL
d = le diamètre extérieur desdits tubes rond (21)
w = le nombre de tours par min de rouleau (t /min)
0,013 = est une constante empirique

**6.** Un rouleau avec un corps cylindrique (1), dont chacune des faces est traversée d'un axe (2) respectif immobile dont les extrémités sont façonnées pour assemblage, ainsi que un roulement (3) est fixé à chaque extrémité du rouleau dans le corps porte-roulement respectif (4), ainsi que respectivement à chaque roulement (3), des joints labyrinthes (5) sont pour la protection contre l'humidité, ainsi que le corps porte-roulement (4) est traversable (creux), et chaque axe immobile présent (2) passe dans un capuchon (6) relié dans l'extrémité des corps porte-roulement (4) respectifs et laquelle il y a une bride (22) au centre de laquelle est fixé l'axe mobile (9), dont les extrémités sont rigidement liées avec des bagues intérieures des roulements (3) respectives et joints labyrinthes (5) sont disposés du côté intérieur, entre le corps porte-roulement (4) et l'axe mobile (9), **caractérisé en ce que**, la bride extérieure (32), ledit axe immobile (2), ledit capuchon (6) et le corps porte-roulement (4) forment un nid monolithe des roulements (3), ainsi que des brides (22) ont uniformément disposées sur sa périphérie des butées convexes (34) ainsi que sur chaque paire de butées (34) situées sur une trace longitudinale, est soudé un tube demi-rond (35) respectif et les axes mobiles (9) sont fixés sur les brides (22) respectives par un écrou nylstop (36).

**7.** Rouleau selon les revendications de 1 à 6, **caractérisé en ce que** le joint labyrinthe (5) est composé d'un jeu (5.1) entre le roulement (3) et la rondelle de fixation (12.1) et sur lui et la rondelle de fixation (12.1) est insérée une rondelle (5.2) plastique de protection.

Fig. 1

**A-A**

Fig. 2

**B-B**

Fig. 3

EP 2 054 327 B1

Fig. 4

Fig. 5

12

**D-D**

21p

d

D

Fig. 6

**C-C**

22

23

24

Fig. 7

1

29    4    1k    12    9    1c    8              1k    29

28
30

2    3    5    7    3    5    10    13
R

OL                                          OL

Fig. 8

Fig. 9

Fig. 10

Fig. 11

**H-H**

34    35    22

D

23

Fig. 12

**J-J**

35

Fig. 13

12.1

9

3

4

5.1    5.2

Fig. 14

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BG 109384 A
- WO 2007070992 A